# EUROPEAN PATENT APPLICATION

(11) **EP 2 251 506 A2**
(43) Date of publication of application: **17.11.2010**
(21) Application number: 10250893.4
(22) Date of filing: 07.05.2010
(51) Int. Cl.: E04H 13/00, E04B 1/48

(54) **Securing apparatus**

(30) Priority: 15.05.2009 GB 0908331
(71) Applicant: Ash, Ivan Robert George, Staffordshire ST6 2DR (GB)
(72) Inventor: Ash, Ivan Robert George, Staffordshire ST6 2DR (GB)
(74) Representative: Sales, Robert Reginald

(57) **Abstract**

Apparatus 10 for securing a gravestone 12 to the ground 14. The apparatus 10 includes a stainless steel bar 24 with a circular section lower part 26 and an upper part 30 with a part of reduced diameter formed by a flat surface 32. Three spaced grooves 34 are provided around the upper part 30. A washer 36 with a D-shaped opening 40 can be located when aligned therewith on the upper part 30 in a required one of the grooves 34, and rotated such that the flat part of the D locks the washer 36 in the respective groove 34. The bar 24 can be inserted through aligned holes 22 in the gravestone 12, with the washer 36 engaging on top of a foundation 20 of the gravestone 12.

## Description

This invention concerns securing apparatus, and particularly but not exclusively securing apparatus for memorials, a method of mounting an item on the ground, and especially a method of mounting a memorial on the ground.

Difficulties have been encountered previously in securely mounting gravestones and other memorials on the ground. Gravestones have on some occasions fallen over which can be very dangerous in view of their not inconsiderable weight. Proposals have been made for securely mounting gravestones but these have not always been wholly satisfactory and have often been difficult to carry out. Furthermore, some such proposals have not been usable with different thicknesses and heights of gravestone bases and foundations.

According to the present invention there is provided apparatus for securing an item to the ground, the apparatus including an elongate member which can extend through a hole in the item into the ground therebeneath, and an engagement member mountable on the elongate member at a selected one of a plurality of positions along the length of the elongate member, with the engagement member engaging around the edge of the hole to retain the elongate member at a required height.

A plurality of spaced formations to which the engagement member is selectively mountable, may be provided on at least an upper part of the elongate member.

A through hole may be provided extending through the upper part of the elongate member.

The formations may be such that the engagement member can be moved into alignment therewith in a first orientation of the engagement member, and can then be moved to a second orientation **characterised in that** the engagement member is mounted on the formation. The engagement member may be rotatable between the first and second orientations.

At least an upper part of the elongate member may have a part non circular cross section, with the engagement member having a non circular opening through which the elongate member can extend, such that when the opening and the elongate member are aligned the engagement member can be slid along the elongate member.

The non circular part of the elongate member cross section may be in the form of a flat face.

The opening in the engagement member may have a generally D shape.

The spaced formations may be in the form of circumferential grooves at least around the circular part of the elongate member.

The elongate member may be in the form of a metal bar which may be made of stainless steel.

The engagement member may be in the form of a washer.

The invention also provides apparatus for mounting a memorial on the ground, the apparatus being according to any of the preceding nine paragraphs.

The invention also provides a method of mounting an item on the ground, the method comprising forming a foundation on the ground, forming aligned holes in the item and through the foundation into the ground, using securing apparatus according to any of the preceding ten paragraphs, locating the engagement member at a required position on the elongate member, locating the elongate member extending through the hole in the foundation with the engagement member engaging on top of the foundation around the hole, and an upper part of the elongate member locating in the hole in the item.

The invention further provides a method of mounting a memorial on the ground, the method comprising forming a foundation on the ground, forming aligned holes in the memorial and through the foundation into the ground, using securing apparatus according to any of said preceding ten paragraphs, locating the engagement member at a required position on the elongate member, locating the elongate member extending through the hole in the foundation with the engagement member engaging on top of the foundation around the hole, and an upper part of the elongate member locating in the hole in the memorial.

Embodiments of the present invention will now be described by way of example only and with reference to the accompanying drawings, **characterised in that**:-
Fig. 1 is a diagrammatic cross sectional view showing a first apparatus according to the invention in use;
Fig. 2 is a front view of part of the apparatus of Fig. 1;
Fig. 3 is a side view of the part of the apparatus of Fig. 2;
Fig. 4 is a plan view of a further part of the apparatus of Fig. 1;
Figs. 5 to 7 are respectively rear views of part of a second apparatus according to the invention in three different conditions;
Fig. 8 is a similar view to Fig. 7 but of part of a third apparatus according to the invention;
Fig. 9 is a similar view to Fig. 7 of part of a fourth apparatus according to the invention; and
Fig. 10 is a similar view to Fig. 7 of part of a fifth apparatus according to the invention.

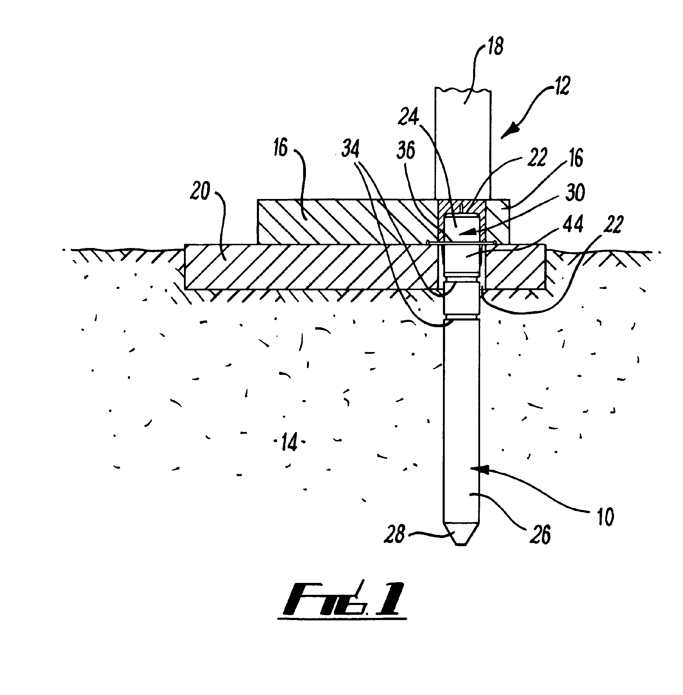

Figs. 1 to 4 show a first securing apparatus 10 for securing a gravestone 12 to the ground 14. The gravestone 12 includes a base 16 and a headstone 18 extending upwardly therefrom. A foundation 20 is provided on the ground upon which the base 16 rests.

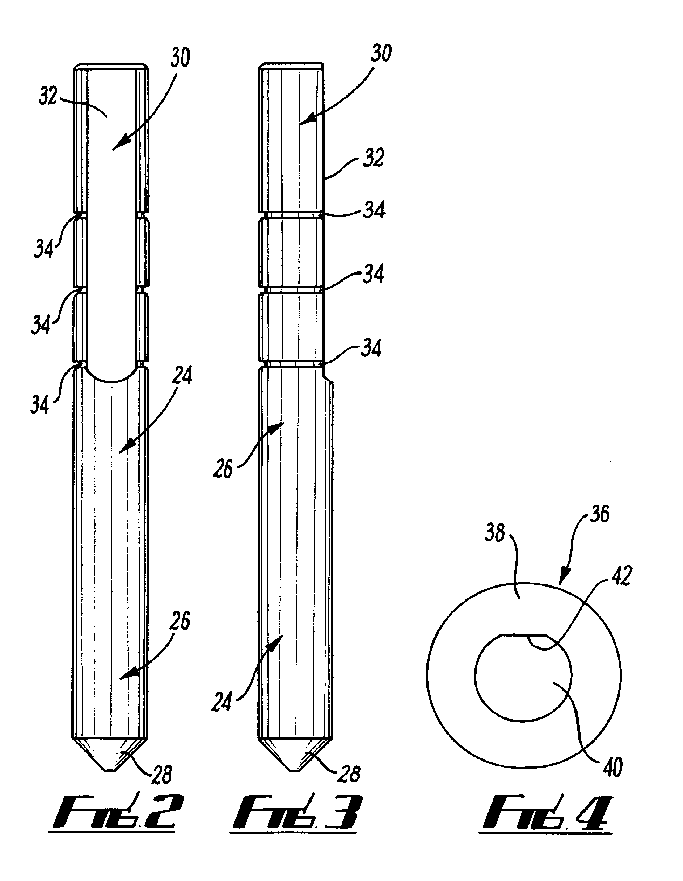

Aligned holes 22 are provided through the base 16 and foundation 20, and the apparatus 10 extends through the holes 22 into the ground 14 therebeneath. The apparatus 10 includes an elongate member in the form of a stainless steel bar 24 as shown in Figs. 2 and 3.

The bar 24 has a lower part 26 of circular cross section with a pointed lower end 28. An upper part 30 of the bar 24 is part circular in cross section, having a part of reduced diameter formed by a flat surface 32. Three spaced grooves 34 are provided in the upper part 30 extending around the circular part of the bar 24.

The apparatus 10 also includes an engagement member in the form of a washer 36. The washer 36 has an annular body 38 with a through opening 40. The opening 40 is not quite circular, having a generally D shape with a part 42 of reduced radius.

In use, the foundation 20 is laid and the aligned holes 22 are formed in the foundation 20 and base 26. The washer 36 is then located on a required one of the grooves 34 dependent on the height of the base 16. The washer 36 is aligned such that the reduced radius part 42 is aligned with the flat surface 32. The washer 36 can then be slid along the upper part 30 of the bar 24 to a required position aligned with a one of the grooves 34.

The washer 36 can then be rotated such that the reduced radius part 42 engages in a one of the grooves 34 to retain the washer 36 at a required height on the bar 24. The bar 24 can then be inserted through the aligned holes 22 and driven into the ground if necessary until the washer 36 engages with the top of the foundation 20. A tapering plastic sleeve 44 may be provided on the bar 24 beneath the washer 36, as shown in Fig. 1.

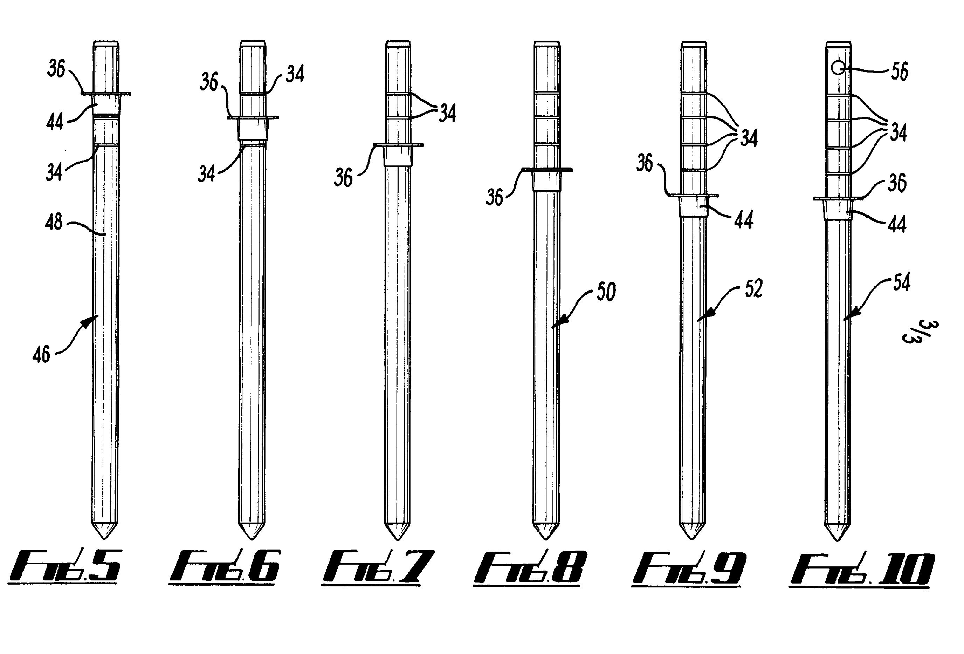

Figs. 5 to 7 show a second bar 46 which is similar to the bar 24 except that the bar 46 has a longer lower part 48 and can thus be driven to a greater depth. Figs. 5 to 7 respectively show the washer 36 mounted in upper middle and lower grooves 34.

Fig. 8 shows a third bar 50 which is similar to the bar 46 except that four grooves 34 are provided, and as in Fig. 7 the washer 36 is in the lowermost groove 34.

Fig. 9 shows a fourth bar 52 which is similar to the bar 50 except that five grooves 34 are provided, and again the washer 46 is mounted on the lowermost groove 34.

Fig. 10 shows a fifth bar 54 which is similar to the bar 52, except that a generally circular through hole 56 is provided at an upper end of the bar 54. In this example, the through hole 56 has a diameter of 7mm, and is provided approximately 25mm from the upper end of the bar 54.

An appropriate tool (not shown) such as an elongate bar can be inserted through the through hole 56. The user can thus pull upwardly and perhaps rotate the bar 54 about its length to withdraw the bar 54 from the ground.

There is thus described an apparatus for securing an item such as a gravestone or other memorial to the ground, and also a method of achieving this. The apparatus used is suitable for different depths of base, and can readily be adjusted by hand to a required depth of base. The apparatus is of relatively straightforward construction and can thus be inexpensively and robustly manufactured for long term operation.

Various other modifications may be made without departing from the scope of the invention. For instance different formations could be provided on the bar. The engagement member could take a different form, and obviously a different number of formations may be provided as required.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus (10) for securing an item (12) to the ground (14), the apparatus (10) including an elongate member (24, 46, 50, 52, 54) which can extend through a hole (22) in the item (12) into the ground (14) therebeneath, and an engagement member (36) mountable on the elongate member (24, 46, 50, 52, 54) at a selected one of a plurality of positions along the length of the elongate member (24, 46, 50, 52, 54) , with the engagement member (36) engaging around the edge of the hole (22) to retain the elongate member (24, 46, 50, 52, 54) at a required height.

2. An apparatus according to claim 1, **characterised in that** a plurality of spaced formations (34) to which the engagement member (36) is selectively mountable are provided on at least an upper part (30) of the elongate member (24, 46, 50, 52, 54).

3. An apparatus according to claim 2, **characterised in that** the formations (34) are such that the engagement member (36) can be moved into alignment therewith in a first orientation of the engagement member (36), and can then be moved to a second orientation in which the engagement member (36) is mounted on the formation (34).

4. An apparatus according to claim 3, **characterised in that** the engagement member (36) is rotatable between the first and second orientations.

5. An apparatus according to claims 3 or 4, **characterised in that** at least an upper part (30) of the elongate member (24, 46, 50, 52, 54) has a part non circular cross section, with the engagement member (36) having a non circular opening (40) through which the elongate member (24, 46, 50, 52, 54) can extend, such that when the opening (40) and the elongate member (24, 46, 50, 52, 54) are aligned the engagement member (36) can be slid along the elongate member (24, 46, 50, 52, 54).

6. An apparatus according to claim 5, **characterised in that** the non circular part of the elongate member (24, 46, 50, 52, 54) cross section is in the form of a flat face (32).

7. An apparatus according to claims 5 or 6, **characterised in that** the opening (40) in the engagement member (36) has a generally D shape.

8. An apparatus according to any of claims 5 to 7, **characterised in that** the spaced formations (34) are in the form of circumferential grooves (34) at least around the circular part (26) of the elongate member (24, 46, 50, 52, 54).

9. An apparatus according to any of the preceding claims, **characterised in that** the elongate member (24, 46, 50, 52, 54) is in the form of a metal bar (24, 46, 50, 52, 54).

10. An apparatus according to claim 9, **characterised in that** the metal bar (24, 46, 50, 52, 54) is made of stainless steel.

11. An apparatus according to any of the preceding claims, **characterised in that** the engagement member (36) is in the form of a washer (36).

12. An apparatus according to any of the preceding claims, **characterised in that** a through hole (56) is provided extending through the upper part of the elongate member (54).

13. An apparatus for mounting a memorial (12) on the ground (14), **characterised in that** the apparatus (10) is according to any of the preceding claims.

14. A method of mounting an item (12) on the ground (14), the method comprising forming a foundation (20) on the ground (14), forming aligned holes (22) in the item (12) and through the foundation (20) into the ground (14), using securing apparatus (10) according to any of claims 1 to 11, locating the engagement member (36) at a required position on the elongate member (24, 46, 50, 52, 54), locating the elongate member (24, 46, 50, 52, 54) extending through the hole (22) in the foundation (20) with the engagement member (36) engaging on top of the foundation (20) around the hole (22), and an upper part (30) of the elongate member (24, 46, 50, 52, 54) locating in the hole (22) in the item (12).

15. A method of mounting a memorial (12) on the ground (14), the method comprising forming a foundation (20) on the ground (14), forming aligned holes (22) in the memorial (12) and through the foundation (20) into the ground (14), using securing apparatus (10) according to any of claims 1 to 11, locating the engagement member (36) at a required position on the elongate member (24, 46, 50, 52, 54), locating the elongate member (24, 46, 50, 52, 54) extending through the hole (22) in the foundation (20) with the engagement member (36) engaging on top of the foundation (20) around the hole (22), and an upper part of the elongate member (24, 46, 50, 52, 54) locating in the hole (22) in the memorial (12).
